Europäisches Patentamt

European Patent Office

Office européen des brevets

(19)

(11) Veröffentlichungsnummer: **0 187 990**

**A2**

(12) **EUROPÄISCHE PATENTANMELDUNG**

(21) Anmeldenummer: **85116325.3**

(22) Anmeldetag: **20.12.85**

(51) Int. Cl.⁴: **B 60 R 13/02**
**B 60 N 1/06**

(30) Priorität: **08.01.85 DE 3500393**

(43) Veröffentlichungstag der Anmeldung:
**23.07.86 Patentblatt 86/30**

(84) Benannte Vertragsstaaten:
**DE FR GB IT SE**

(71) Anmelder: **Gebr. Happich GmbH**
**Postfach 10 02 49 Clausenbrücke 1**
**D-5600 Wuppertal 1(DE)**

(72) Erfinder: **Wolff, Martin**
**Felderbachstrasse 119 A**
**D-4320 Hattingen(DE)**

(54) **Verkleidungselement, insbesondere für den Innenraumbereich von Fahrzeugen, sowie Verfahren zum Herstellen eines solchen.**

(57) Bei einem Verkleidungselement, insbesondere für den Innenraumbereich von Fahrzeugen, wie Türtafel (1), Armaturentafel, Säulenverkleidung oder dgl., mit einem Trägerkörper (6) und einer diesen zumindest auf einer seiner Hauptflächen abdeckenden Dekorfolie (7) und mit wenigstens einem vorstehenden, die Dekorfolie (7) bereichsweise bügelartig überbrückenden Formteil (2), wie Haltegriff (4), Armlehne (3) mit Durchgriff, Einhängebügel (5) oder dgl., welches aus einem von einer schlauchartigen Hüllfolie (9) umgebenen Kern (8) besteht, ist vorgesehen, daß die Dekorfolie (7) einstückig mit der Hüllfolie (9) ausgebildet ist und aus einer vorgeformten Kunststoffhaut besteht und daß der Trägerkörper (6) einstückig mit dem Kern (8) ausgebildet ist und aus Schaumkunststoff besteht. Das neue Verfahren zum Herstellen eines Verkleidungselements zeichnet sich dadurch aus, daß in einem ersten Verfahrensschritt eine einstückige, die Dekorfolie und die Hüllfolie bildende Kunststoffhaut geformt und in einem zweiten Verfahrensschritt zwecks Bildung des Trägerkörpers nebst Kern die Hüllfolie mit Schaumkunststoff ausgeschäumt und die Dekorfolie mit demselben Schaumkunststoff gleichzeitig hinterschäumt wird.

Fig. 1

EP 0 187 990 A2

./...

Croydon Printing Company Ltd

*Fig. 5*

- 1 -

H 1076/77                                    27.11.1984 Pom/Eng.

GEBR. HAPPICH GMBH, D- 5600 WUPPERTAL
Bundesrepublik Deutschland


Verkleidungselement, insbesondere für den Innenraumbereich von Fahrzeugen, sowie Verfahren zum Herstellen
eines solchen

Die Erfindung bezieht sich auf ein Verkleidungselement,
insbesondere für den Innenraumbereich von Fahrzeugen,
wie Türtafel, Armaturentafel, Säulenverkleidung oder
dgl., mit einem Trägerkörper und einer diesen zumindest
auf einer seiner Hauptflächen abdeckenden Dekorfolie und
mit wenigstens einem vorstehenden, die Dekorfolie bereichsweise bügelartig überbrückenden Formteil, wie Haltegriff, Armlehne mit Durchgriff, Einhängebügel oder dgl.,
welches aus einem von einer schlauchartigen Hüllfolie umgebenen Kern besteht. Die Erfindung bezieht sich weiterhin auf ein Verfahren zum Herstellen eines Verkleidungselements.

Verkleidungselemente für den Innenraumbereich von Fahrzeugen bestehen üblicherweise aus einem vorderseitig mit
einer Dekorfolie kaschierten Trägerkörper. Als Trägerkörper werden dabei solche aus Preßpappe oder dgl. oder auch solche aus Schaumkunststoff mit oder ohne Armierung eingesetzt. Die bekannten Verkleidungselemente können sowohl mit muldenförmigen Einziehungen als auch mit Ausbauchungen hergestellt werden, wobei dann die Einziehungen z.B. Ablageschalen und die Ausbauchungen, wenn sie an Türtafeln vorgesehen sind, z.B. Armauflagen bilden. An den Vorderseiten der installierten Verkleidungselemente werden häufig vorstehende Bauteile, die die Dekorfolie bereichsweise bügelartig überbrücken, angeordnet. Hierbei handelt es sich um Haltegriffe, Armlehnen-Haltegriffkombinationen, Armlehnen mit Durchgriff, Einhängebügel und dgl.. Solche Formteile müssen nun separat hergestellt, auf Lager gehalten und montiert werden, was einen erheblichen Aufwand bedeutet, zumal sie recht unterschiedliche Formgebungen, farbliche Ausgestaltungen und unterschiedlich angeordnete Befestigungsstellen aufweisen. Insbesondere die Befestigung der Formteile ist oftmals mühsam, weil hierzu die Verkleidungselemente an definierten Stellen gelocht und die hinter den Verkleidungselementen befindlichen karosserieseitigen Befestigungsstellen ohne Sichtkontrolle aufgefunden werden müssen. Ähnlich schwierig sind die Verhältnisse auch dann, wenn die Formteile an innerhalb der Verkleidungselemente angeordneten Armierungseinlagen schraubgemäß befestigt werden sollen. Weiterhin ergeben sich Probleme bei der nachträglichen Anordnung von Formteilen in bezug auf die Abstimmung der Anlagekontur zwischen Verkleidungselement und Formteil und auf die Befestigungsstellen, die es mittels Stopfen oder Kappen abzudecken gilt.

Der Erfindung liegt nun ausgehend von einem Verkleidungselement der eingangs genannten Art die Aufgabe zugrunde, die Anordnung eines Formteils am Verkleidungselement zu vereinfachen, wobei insbesondere die Einsparung von Fertigungsvorrichtungen, Lagerkapazität und Montagearbeiten angestrebt wird und weiterhin ein besonders einfach und kostengünstig durchzuführendes Verfahren zum Herstellen eines solchen Verkleidungselementes aufzuzeigen.

Zur Lösung des zuerst genannten Aufgabenteils ist erfindungsgemäß vorgesehen, daß die Dekorfolie einstückig mit der Hüllfolie ausgebildet ist und aus einer vorgeformten Kunststoffhaut besteht und daß der Trägerkörper einstückig mit dem Kern ausgebildet ist und aus Schaumkunststoff besteht.

Zufolge dieser erfindungsgemäßen Maßnahmen ist ein Verkleidungselement mit integriertem Formteil geschaffen, d. h., das Verkleidungselement und das Formteil bilden nun ein einteiliges Bauelement. Damit entfällt aber die bisher erforderlich gewesene separate Herstellung der Formteile ebenso wie die aufwendige Lagerhaltung und die arbeitsintensive Montage.

Bevorzugterweise ist vorgesehen, daß die den Kern umgebende schlauchartig ausgebildete Hüllfolie mit einem Ende einstückig in die Dekorfolie übergeht und mit ihrem anderen Ende in eine in der Dekorfolie vorgesehene Öffnung eingreift. Diese Maßnahme ermöglicht eine besonders einfache Herstellung der Kunststoffhaut, da durch die einendige Trennung der Hüllfolie von der Dekorfolie eine problemlose Entformung der vorgeformten Kunststoffhaut aus der entsprechenden Herstellungsform gewährleistet ist. Im angebundenen Bereich der Hüllfolie an der Dekorfolie ergibt sich vorteilhafterweise keine Trennkante zwischen dem Formteil und dem eigentlichen Verkleidungselement und es ergeben sich auch deutlich erweiterte stilistische Möglichkeiten. Aber auch im nicht angebundenen Endbereich die Hüllfolie ist, da dieser in eine hierfür vorgesehene Öffnung in der Dekorfolie eingreift, immer eine exakte Anlage des Formteils im Trennbereich gewährleistet.

In weiterer Ausgestaltung der Erfindung kann vorgesehen sein, daß der freie Endbereich der schlauchartig ausgebildeten Hüllfolie einen stufenförmig abgesetzten, im Querschnitt verjüngten Endabschnitt aufweist, dessen Querschnitt auf die Abmessungen der in der Dekorfolie vorgesehenen Öffnung abgestimmt ist. Dabei ist zweckmäßigerweise weiterhin vorgesehen, daß der senkrecht an den verjüngten Endabschnitt angrenzende Kragen der Hüllfolie in enger Berührungsanlage mit der Dekorfolie steht. Durch diese Maßnahmen wird die exakte Anlage des Formteils im Trennbereich noch verbessert.

Eine weitere Vervollkommnung läßt sich dadurch erzielen, daß zwischen dem Kragen der Hüllfolie und der Dekorfolie eine Rosette eingeklemmt ist, die ein Loch zum Durchlaß des stufenförmig abgesetzten, im Querschnitt verjüngten Endabschnitts der Hüllfolie aufweist.

Gemäß einer weiteren Ausgestaltung der Erfindung kann sich an den Öffnungsrand der in der Dekorfolie vorgesehenen Öffnung ein in Richtung zum Trägerkörper weisender stutzenförmiger Ansatz einstückig anschließen, in den der freie Endbereich der schlauchartigen Hüllfolie eingreift. Damit läßt sich das im Trennbereich bestehende Abdichtungsproblem in bezug auf einen Schaumaustritt beim Aus- bzw. Hinterschäumen einfacher bewältigen.

Von besonderem Vorteil ist eine weitere Maßnahme der Erfindung, die vorsieht, daß die Enden des die Hüllfolie ausfüllenden Kerns unmittelbar in den Trägerkörper übergehen. Damit ist ein intimer Schaumverbund zwischen dem Trägerkörper und dem Kern, insbesondere auch im Trennbereich zwischen der Dekorfolie und der Hüllfolie gegeben.

Zweckmäßigerweise weist zumindest der Kern eine im Schaumkunststoff eingebettete Verstärkungseinlage auf, so daß sich für das Formteil eine erhöhte Stabilität ergibt, was wichtig ist, wenn das Formteil als Türzuziehgriff oder Haltegriff dienen soll. Diese Verstärkungseinlage kann einen die Öffnung der Dekorfolie durchgreifenden Endbereich und einen die Innenseite des Kragens der Hüllfolie hintergreifenden Anlagebereich aufweisen.

Das zum Herstellen eines Verkleidungselements vorgesehene Verfahren zeichnet sich erfindungsgemäß dadurch aus, daß in einem ersten Verfahrensschritt eine einstückige, die Dekorfolie und die Hüllfolie bildende Kunststoffhaut geformt und in einem zweiten Verfahrensschritt zwecks Bildung des Trägerkörpers nebst Kern die Hüllfolie mit Schaumkunststoff ausgeschäumt und die Dekorfolie mit demselben Schaumkunststoff gleichzeitig hinterschäumt wird.

Ein weiteres zum Herstellen eines Verkleidungselement besonders gut geeignetes Verfahren zeichnet sich erfindungsgemäß dadurch aus, daß in einem ersten Verfahrensschritt eine einstückige, die Dekorfolie und die daran mit einem Endbereich angebundene Hüllfolie bildende Kunststoffhaut geformt wird, daß in einem zweiten Verfahrensschritt der freie Endbereich der Hüllfolie in eine in der Dekorfolie vorgesehene Öffnung gesteckt und die Trennstelle abgedichtet wird, und daß in einem dritten Verfahrensschritt zwecks Bildung des Trägerkörpers nebst Kern die Hüllfolie mit Schaumkunststoff ausgeschäumt und die Dekorfolie mit demselben Schaumkunststoff gleichzeitig hinterschäumt wird. Im einzelnen kann weiterhin noch vorgesehen sein, daß am freien Endbereich der Hüllfolie ein stufenförmig abgesetzter, im Querschnitt verjüngter Endabschnitt angeformt wird und daß der dadurch gebildete Kragen vor dem Ausschäumen der Hüllfolie und dem Hinterschäumen der Dekorfolie in enge Berührungsanlage mit der Dekorfolie gebracht wird. Insbesondere kann vorgesehen sein, daß die Kunststoffhaut aus gelierfähigem Kunststoffmaterial (Plastisol) innerhalb einer Form durch Verteilen einer gleichmäßigen Schicht über die Innenfläche des Formhohlraumes und Ausgelieren der Schicht geformt wird. Im übrigen soll sich der Begriff "Kunststoffhaut" im Rahmen der vorliegenden Erfindung sowohl auf das Rotieren als auch auf das Sturzgießen sowie auf verwandte Verfahren beziehen.

Durch die aufgezeigten erfindungsgemäßen Verfahrensschritte ergeben sich wesentliche Vorteile in verschiedener Hinsicht. Zunächst entfällt ein gesondertes Formteil, z.B. ein Haltegriff (als Anbauteil). Es entsteht allenfalls eine Trennkante zwischen dem eigentlichen Verkleidungselement und

dem Formteil, bei der allerdings eine exakte Anlage im Trennbereich, nicht zuletzt auch wegen des hier vorgesehenen intimen Schaumverbundes, gewährleistet ist. Von Vorteil ist es auch, daß die Befestigungspositionen des Verkleidungselementes verdeckt anordbar sind, da sie nicht im Bereich des Formteils angeordnet werden müssen. Es bestehen auch nur vergleichsweise geringe Dichtungsprobleme beim Schäumen, da nur eine geringe Trennkantenlänge vorliegt und ein vergleichweise steifer Dichtbereich der Kunststoffhaut vorhanden ist.

Im folgenden werden Ausführungsbeispiele der Erfindung anhand der Zeichnung näher erläutert. Es zeigen:

Fig. 1 ein Verkleidungselement mit einem als Armlehnen-Haltegriff-Kombination ausgebildeten Formteil,

Fig. 2 ein Verkleidungselement mit einem Formteil, welches eine Armlehne, einen Haltegriff und einen Bügel umfaßt,

Fig. 3 ein Verkleidungselement mit einem als Haltegriff ausgebildeten Formteil,

Fig. 4 einen Schnitt durch das Verkleidungselement etwa folgend der Linie IV - IV nach Fig. 1 im noch nicht vervollständigten Zustand,

Fig. 5 den gleichen Schnitt durch das Verkleidungselement im vervollständigten Zustand und

Fig. 6 eine Einzelheit der Erfindung

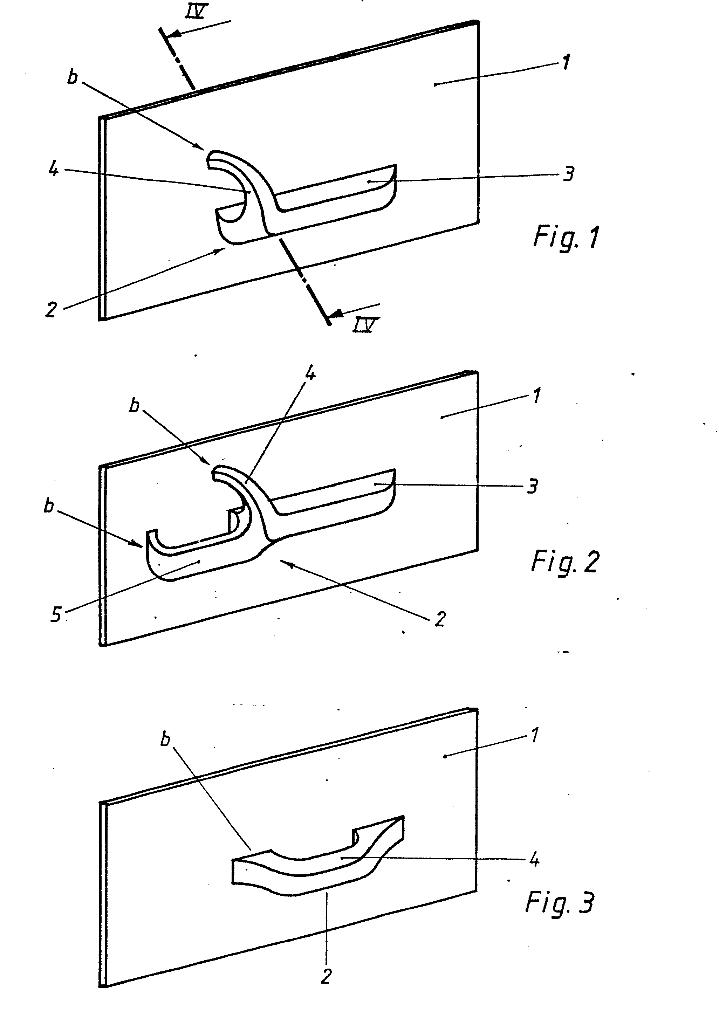

Fig. 1 bis 3 zeigen jeweils ein als Türtafel 1 für Fahrzeuge ausgebildetes Verkleidungselement mit integriertem Formteil 2. Das Formteil 2 besteht beim Ausführungsbeispiel nach Fig. 1 aus einer Armauflage oder Armlehne 3 und aus einem damit kombinierten Haltegriff 4, der die Türtafel 1 bereichsweise bügelartig überbrückt und der damit umgriffen werden kann. Beim Ausführungsbeispiel nach Fig. 2 weist das Formteil 2 eine Armlehne 3, einen Haltegriff 4 und weiterhin einen Bügel 5 auf, der die Türtafel 1, ebenso wie der Haltegriff 4, bereichsweise überbrückt, also nur mit seinen Enden in die Türtafel 1 übergeht. Beim

Ausführungsbeispiel nach Fig. 3 ist das Formteil 2 als Haltegriff 4 ausgebildet.

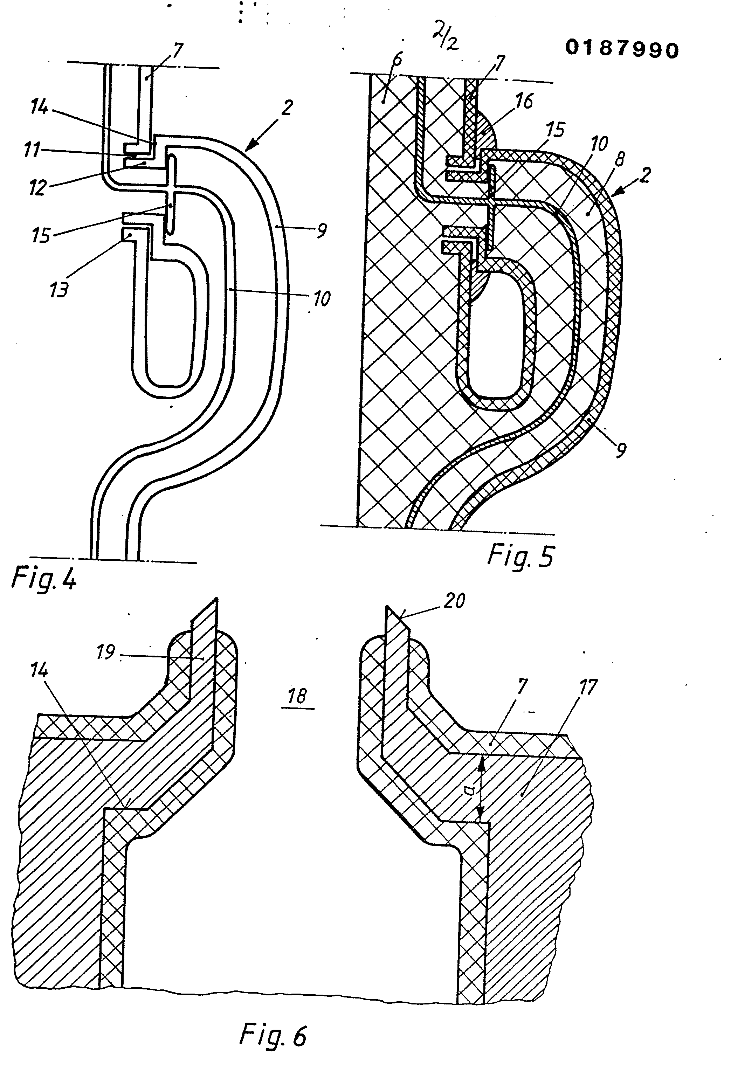

Die Schnittdarstellungen nach Fig. 4 und 5 zeigen den Grundaufbau des Verkleidungselements und lassen erkennen, daß dieses aus einem Trägerkörper 6 mit einer diesen auf seiner Hauptfläche ggf. auch randumgreifend abdeckenden Dekorfolie 7 und aus einem vorstehenden, die Dekorfolie 7 bereichsweise bügelartig überbrückenden Formteil 2 besteht. Das Formteil 2 wird dabei gebildet aus einem Kern 8 und einer diesen umgebenden schlauchartig ausgebildeten Hüllfolie 9. Der Kern 8 weist eine eingelagerte Verstärkungseinlage 10 auf, die sich im dargestellten Ausführungsbeispiel auch in Bereiche des Trägerkörpers 6 erstreckt. Die Besonderheit des neuen Verkleidungselements besteht nun darin, daß die Dekorfolie 7 einstückig mit dem Kern 8 ausgebildet ist und aus Schaumkunststoff besteht. Fig. 4 und 5 lassen weiterhin erkennen, daß die den Kern 8 umgebende schlauchartige Hüllfolie 9 in eine Öffnung 11, die in der Dekorfolie 7 vorgesehen ist, eingreift. Dieser "freie" Endbereich der Hüllfolie 9 weist einen stufenförmig abgesetzten, im Querschnitt verjüngten Endabschnitt 12 auf, dessen Querschnitt auf die Abmessungen der in der Dekorfolie 7 vorgesehenen Öffnung 11 abgestimmt ist. An den Rand der Öffnung 11 ist ein nach hinten gerichteter stutzenförmiger Ansatz 13 angeformt, der den Endabschnitt 12 aufnimmt. Durch den stufenförmig abgesetzten Endabschnitt 12 ist ein parallel zur Dekorfolie 7 verlaufender Kragen 14 gebildet, der in enger Anlageberührung mit der Dekorfolie steht. Um die enge Anlageberührung zwischen dem Kragen 14 und der Dekorfolie 7 herzustellen, ist die Verstärkungseinlage 10 mit einer die Innenseite des Kragens 14 hintergreifenden, einen Anlagebereich 15 bildenden Verbreiterung ausgebildet, die es ermöglicht, den Kragen 14 vor Einleitung des Schäumvorganges an die Dekorfolie 7 heranzuziehen. Dabei ist es (vgl. Fig. 5) auch möglich, zwischen dem Kragen 14 und der Dekorfolie 7 eine gelochte Rosette 16 einzuklemmen, so daß der gesamte Trennbereich den Blicken eines Betrachters entzogen ist.

Fig. 6 zeigt den Teilbereich einer Fertigungsvorrichtung für die Herstellung der Kunststoffhaut. Es handelt sich hier um eine offene Form 17, in der die Kunststoffhaut durch ein sogenanntes Sturzgießverfahren hergestellt wird, wobei die Gießform mit einem Plastisol gefüllt, wieder entleert und dabei durch Erwärmung der Formwand an deren Innenwand ein Plastisolüberzug zum Gelieren gebracht und der Formling aus der abgekühlten Form entnommen wird.

In Fig. 6 ist nur die beispielhafte Ausbildung der Form 17 im Trennbereich der Kunststoffhaut dargestellt. Zwischen dem Kragen 14 und der Außenfläche der Dekorfolie 7 ist innerhalb der Form 17 ein Abstand a vorgesehen. Die Größe des Abstandes a wird bestimmt durch die jeweils zu ermittelnden technologischen Formgegebenheiten (wie z.B. galvanotechnische Probleme, Beheizbarkeit der Form usw.). Im Trennbereich zwischen dem Formteil 2 und der Türtafel 1 oder dgl. weist die Form 17 einen Entlüftungskanal 18 auf, der durch einen rohrstutzenförmigen Einsatz oder Ansatz 19 gebildet wird.Dieser Ein- oder Ansatz 19 ist am freien Endbereich mit einer scharfen Kante 20 versehen.

Sollte bei der Hautherstellung eine Hautverbindung zwischen dem Endabschnitt 12 und dem stutzenförmigen Ansatz 13 entstehen, kann diese durch die thermischen Bedingungen im Entlüftungskanal 18 nur sehr dünn sein und daher bei Zwangsentformung der Kunststoffhaut leicht durch die scharfe Kante 20 durchtrennt werden.

Bei der Herstellung des neuen Verkleidungselemtes sollte man im allgemeinen so verfahren, daß zunächst eine Kunststoffhaut gebildet, eine Verstärkungseinlage 10 zumindest in den Formteilbereich eingefädelt und die ggf. durch eine Rosette 16 ergänzte Haut in eine nicht gezeigte Schäumform eingelegt und hier im Hüllfolienbereich ausgeschäumt und im Dekorfolienbereich hinterschäumt wird. Beim Einlegen der Haut in die Schäumform ist natürlich darauf zu achten, daß im Trennbereich eine zuverlässige Abdichtung gewährleistet ist.

In Fig. 1 und 3 ist jeweils ein Trennbereich b und in Fig. 2 sind zwei Trennbereiche b vorgesehen.

H 1076/77                                    27.11.1984 Pom/Eng.

Patentansprüche

1. Verkleidungselement, insbesondere für den Innenraumbereich von Fahrzeugen, wie Türtafel (1), Armaturentafel, Säulenverkleidung oder dgl., mit einem Trägerkörper (6) und einer diesen zumindest auf einer seiner Hauptflächen abdeckenden Dekorfolie (7) und mit wenigstens einem vorstehenden, die Dekorfolie (7) bereichsweise bügelartig überbrückenden Formteil (2), wie Haltegriff (4), Armlehne (3) mit Durchgriff, Einhängebügel (5) oder dgl., welches aus einem von einer schlauchartigen Hüllfolie (9) umgebenen Kern (8) besteht, dadurch gekennzeichnet, daß die Dekorfolie (7) einstückig mit der Hüllfolie (9) ausgebildet ist und aus einer vorgeformten Kunststoffhaut besteht und daß der Trägerkörper (6) einstückig mit dem Kern (8) ausgebildet ist und aus Schaumkunststoff besteht.

2. Verkleidungselement nach Anspruch 1, dadurch gekennzeichnet, daß die den Kern (8) umgebende schlauchartig ausgebildete Hüllfolie (9) mit einem Ende einstückig in die Dekorfolie (7) übergeht und mit ihrem anderen Ende in eine in der Dekorfolie (7) vorgesehene Öffnung (11) eingreift.

3. Verkleidungselement nach Anspruch 2, dadurch gekennzeichnet, daß der freie Endbereich der schlauchartig ausgebildeten Hüllfolie (9) einen stufenförmig abgesetzten, im Querschnitt verjüngten Endabschnitt (12) aufweist, dessen Querschnitt auf die Abmessungen der in der Dekorfolie (7) vorgesehenen Öffnung (11) abgestimmt ist.

4. Verkleidungselement nach Anspruch 3, dadurch gekennzeichnet, daß der senkrecht an den verjüngten Endabschnitt (12) angrenzende Kragen (14) der Hüllfolie (9) in enger Berührungsanlage mit der Dekorfolie (7) steht.

5. Verkleidungselement nach Anspruch 3 oder 4, dadurch gekennzeichnet, daß zwischen dem Kragen (14) der Hüllfolie (9) und der Dekorfolie (7) eine Rosette (16) eingeklemmt ist, die ein Loch zum Durchlaß des stufenförmig abgesetzten, im Querschnitt verjüngten Endabschnitts (12) der Hüllfolie (9) aufweist.

6. Verkleidungselement nach einem oder mehreren der Ansprüche 2 bis 5, dadurch gekennzeichnet, daß sich an den Öffnungsrand der in der Dekorfolie (7) vorgesehenen Öffnung (11) ein in Richtung zum Trägerkörper (6) weisender stutzenförmiger Ansatz (13) einstückig anschließt, in den der freie Endbereich der schlauchartigen Hüllfolie (9) eingreift.

7. Verkleidungselement nach einem oder mehreren der Ansprüche 1 bis 6, dadurch gekennzeichnet, daß die Enden des die Hüllfolie (9) ausfüllenden Kerns (8) unmittelbar in den Trägerkörper (6) übergehen.

8. Verkleidungselement nach einem oder mehreren der Ansprüche 1 bis 7, dadurch gekennzeichnet, daß zumindest der Kern (8) eine im Schaumkunststoff eingebettete Verstärkungseinlage (10) aufweist.

9. Verkleidungselement nach Anspruch 8, dadurch gekennzeichnet, daß die im Schaumkunststoff des Kerns (8) eingebettete Verstärkungseinlage (10) einen die Öffnung (11) der Dekorfolie (7) durchgreifenden Endbereich und einen die Innenseite des Kragens (14) der Hüllfolie (9) hintergreifenden Anlagebereich (15) aufweist.

10. Verfahren zum Herstellen eines Verkleidungselements, insbesondere nach Anspruch 1, dadurch gekennzeichnet, daß in einem ersten Verfahrensschritt eine einstückige, die Dekorfolie und die Hüllfolie bildende Kunststoffhaut geformt und in einem zweiten Verfahrensschritt zwecks Bildung des Trägerkörpers nebst Kern die Hüllfolie mit Schaumkunststoff ausgeschäumt und die Dekor-

- 11 -

0187990

folie mit demselben Schaumkunststoff gleichzeitig hinterschäumt wird.

11. Verfahren zum Herstellen eines Verkleidungselements, insbesondere nach Anspruch 2, dadurch gekennzeichnet, daß in einem ersten Verfahrensschritt eine einstückige, die Dekorfolie und die daran mit einem Endbereich angebundene Hüllfolie bildende Kunststoffhaut geformt wird, daß in einem zweiten Verfahrensschritt der freie Endbereich der Hüllfolie in eine in der Dekorfolie vorgesehene Öffnung gesteckt und die Trennstelle abgedichtet wird und daß in einem dritten Verfahrensschritt zwecks Bildung des Trägerkörpers nebst Kern die Hüllfolie mit Schaumkunststoff ausgeschäumt und die Dekorfolie mit demselben Schaumkunststoff gleichzeitig hinterschäumt wird.

12. Verfahren nach Anspruch 11, dadurch gekennzeichnet, daß am freien Endbereich die Hüllfolie ein stufenförmig abgesetzter, im Querschnitt verjüngter Endabschnitt angeformt wird und daß der dadurch gebildete Kragen vor dem Ausschäumen der Hüllfolie und dem Hinterschäumen der Dekorfolie in enge Berührungsanlage mit der Dekorfolie gebracht wird.

13. Verfahren nach Anspruch 10 oder 11 und 12, dadurch gekennzeichnet, daß die Kunststoffhaut aus gelierfähigem Kunststoffmaterial (Plastisol) innerhalb einer Form durch Verteilen einer gleichmäßigen Schicht über die Innenfläche des Formhohlraumes und Ausgelieren der Schicht geformt wird.

0187990

1/2

Fig. 1

Fig. 2

Fig. 3

0187990

Fig. 4

Fig. 5

Fig. 6